# EUROPEAN PATENT APPLICATION

(11) **EP 1 538 020 A2**
(43) Date of publication of application: **08.06.2005**
(21) Application number: 04006546.8
(22) Date of filing: 18.03.2004
(51) Int. Cl.: B60M 3/00

(54) **Railway regenerative power absorption control method, device thereof and power converter control device**

(30) Priority: 04.12.2003 JP 2003405523
(71) Applicant: Hitachi, Ltd., Chiyoda-ku, Tokyo 101-8010 (JP)
(72) Inventor: Ito, Tomomichi, c/o Hitachi Ltd., Int. Prop. Group, Chiyoda-ku Tokyo 100-8220 (JP); Kato, Tetsuya, c/o Hitachi Ltd., Int. Prop. Group, Chiyoda-ku Tokyo 100-8220 (JP); Ikimi, Takashi, c/o Hitachi Ltd., Int. Prop. Group, Chiyoda-ku Tokyo 100-8220 (JP); Takuma, Kiyoshi, c/o Hitachi Ltd., Int. Prop.Group, Chiyoda-ku Tokyo 100-8220 (JP)
(74) Representative: Beetz & Partner Patentanwälte

(57) **Abstract**

A control method, device and a power converter control device for efficiently controlling energy by utilizing a step-up/step-down chopper (DC-to-DC converter) to control the amount of energy stored in an electrical power storage device installed in direct current feeder sections for economically storing electrical energy. Prior to absorbing electrical power during operation, the rise in voltage on the feeder cable from the regenerative railcar is predicted from the operating information on that railcar within a database, the electrical power that should be discharged from the electrical power storage device up until that predicted time is found, the power command W* for uniform discharging is calculated, and controlled discharge is performed using the chopper circuit. The invention improves the utilization rate of the electrical power storage device, and improves the electric railway energy efficiency by utilizing a small capacity electrical power storage device to allow lower cost equipment.

## Description

### FIELD OF THE INVENTION

The present invention relates to a railway regenerative power absorption control method, a device for this method, and a power converter control device, containing an electrical power storage device and electrical power converter equipment for absorbing or supplying electrical power in electric railway systems.

### BACKGROUND OF THE INVENTION

In recent years, electrical supply networks for supplying direct-current electrical power from power substations to electrical railcars (or electric rolling stock) have started to utilize regenerative braking with the goal of conserving energy in electric rolling stock. This regenerative braking converts the motive or movement energy of the electric railway/rolling stock to electrical energy by using an electric inverter mounted in the vehicle, and discharges the electrical energy through a feeder line to slow down the electric railcar or electric rolling stock. The electrical energy discharged from this regenerative brake is consumed as acceleration energy by other electric vehicles to save energy in the feeder system.

However, when the electrical energy discharged from the regenerative railcar is larger than needed by the other electric vehicle, the pantograph point voltage in the vicinity of the regenerative railcar rises. When the pantograph point voltage rises above a predetermined value, the regenerative brake is automatically disabled, and the vehicle switches to mechanical braking to protect the chassis from excessive voltage (over-voltage) causing poor energy savings and uncomfortable riding sensation.

A method was disclosed in the related art as shown in Patent Document 1 to resolve this problem by storing surplus electrical power in an electrical power storage device, and discharge it as electric railcar motive or movement energy.

[Patent Document 1] JP-A 91415/1999 (paragraph No. 0012, FIG. 5, etc.)

However, this method has such a problem that when the electric railcar regenerative operation continues, the charging rate of the electrical power storage device increases. The maximum allowable charging rate finally is exceeded and electrical power can no longer be absorbed. Increasing the capacity of the power storage device as a countermeasure causes such a problem that the utilization rate of the power storage device drops and the cost of the overall system becomes high.

### SUMMARY OF THE INVENTION

In view of the above problems with the related art, the present invention has the object of providing a power storage type regenerative power absorption device and method for boosting energy efficiency by improving the utilization rate of the electrical power storage device.

The preferred embodiment of the present invention predicts the rise in voltage in the feeder line for control, and discharges stored electrical power from the electrical power storage device into a feeder line (or line).

The present invention therefore provides a power storage type regenerative electrical power absorption control method and device capable of preventing unforeseen increases in voltage above a predetermined value in the controlled feeder line and effectively absorbing regenerative electrical power, improving the utilization rate of the electrical power storage device and boosting the energy efficiency.

### BRIEF DESCRIPTION OF THE DRAWINGS

FIG. 1 is a block diagram of the storage type regenerative power absorption device of the embodiment of the present invention;
FIG. 2A is a detailed block diagram of the discharge power command section of the embodiment of the present invention;
FIG. 2B is an another detailed block diagram of the discharge power command section of the embodiment of the present invention;
FIG. 3 is an operation waveform chart of the storage type regenerative power absorption device of the embodiment of the present invention;
FIG. 4 is a block diagram of the storage type regenerative power absorption device of another embodiment of the present invention;
FIG. 5 is an operation waveform chart of the storage type regenerative power absorption device of the other embodiment of the present invention.

### DETAILED DESCRIPTION OF THE INVENTION

The embodiments of the present invention are hereinafter described while referring to the accompanying drawings.

### First Embodiment

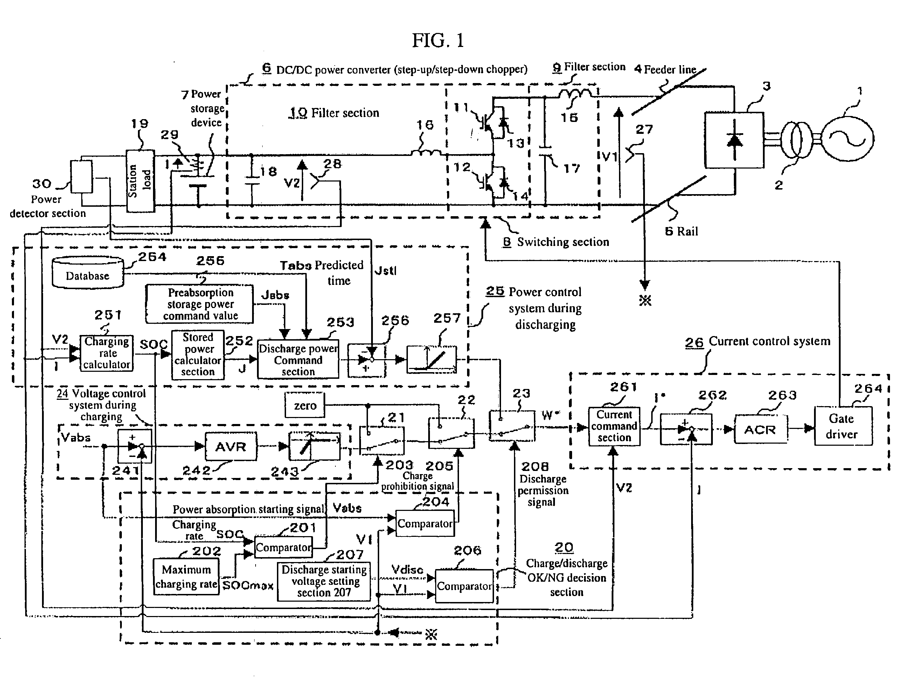

FIG. 1 is a block diagram of the storage type regenerative power absorption device of an embodiment of the present invention. The electrical power system is described here first. The alternating current system 1 supplies for example, a direct current of 1,500 volts across the feeder line 4 and the rail 5 (hereafter written simply as feeder lines 4, 5) by way of the transformer 2 and the diode rectifier 3. An electrical power storage device 7 is connected to these feeder line 4 and the rail 5 by way of a DC/DC power converter 6 typified by step-up/step-down chopper device.

In the present embodiment, the DC/DC power converter 6 is a step-up/step-down chopper device, including a switching section 8 between two filters 9 and 10. The switching section 8 comprises a series-connected IGBT (Insulated Gate Bipolar transistor) 11 and 12. The free-wheeling diodes 13 and 14 are connected in reverse parallel to each IGBT. The two filters 9 and 10 are respectively comprised of reactors 15 and 16, and capacitors 17 and 18. As is well known, the DC/DC power converter 6 (step-up/step-down chopper) uses PWM control to boost the stored voltage of electrical power storage device 7 and to discharge it into the feeder lines 4, 5, or to lower the voltage of feeder line 4, 5 and to supply it to the electrical power storage device 7.

The electrical power storage device 7 is connected to a station load device 19 to also supply stored electrical power to equipment around the train station. This electrical power storage device 7 has many possible configurations such as a secondary battery, an electrical dual-layer capacitor or a flywheel generator, etc.

The control device is described next. In this embodiment, the control system comprises a charge/discharge OK/NG decision section 20 and the selector switches 21 through 23 selected by this decision section 20, and a voltage control system 24 for use during charging, and a power control system 25 for use during discharging, as well as a current control system 26 to operate based on power commands acquired from these power control systems 25.

The charge/discharge OK/NG decision section 20 is described first. Firstly, it performs a decision to allow charging, based on the maximum charge rate SOCmax of electrical power storage device 7. The comparator 201 compares the current charging rate SOC with the maximum charge rate SOCmax from the maximum charge rate setting section 202. When the charge rate SOC exceeds the maximum charge rate SOCmax, the comparator 201 outputs a charge prohibition signal 203. This charge prohibition signal 203 switches the selector switch 21 from the state shown in the drawing to the upper side (contact) so that the voltage control circuit 24 is isolated from the system and the power command W* is zero for the control system from that point onwards.

Secondly, the charge/discharge OK/NG decision section 20 prohibits charging of the electrical power storage device 7 from the feeder line voltage V1. The comparator 204 compares the feeder line voltage V1 detected in the voltage detector 27, with the power absorption starting voltage Vabs applied to electrical power storage device 7. When the feeder line voltage V1 drops below this voltage, a second charge prohibition signal 205 is output, and the selector switch 22 is switched from the state shown in the drawing to the upper side (contact). In this case also, the voltage control circuit 24 is isolated from the system and the power command W* is zero for the control system from that point onwards.

Thirdly, the charge/discharge OK/NG decision section 20 switches charge/discharge by the feeder line voltage V1. The comparator 206 compares the feeder line voltage V1 with the discharge starting voltage Vdisc from the discharge starting voltage setting section 207. When the feeder line voltage V1 drops below the discharge starting voltage Vdisc, a discharge permission signal 208 allowing discharge to the feeder line from the electrical power storage device 7 is output to switch the selector switch 23 from state shown in the drawing to the upper side (contact). This switches the control system to the power control system 25 for discharging. However, if the feeder line voltage V1 exceeds the discharge starting voltage Vdisc, then the selector switch 23 state shown in the drawing is maintained, and only charging with the voltage control system 24 is permitted.

When the discharge starting voltage Vdisc is too large compared to the output voltage from the diode rectifier 3 under a no-load condition, the feeder line voltage rises too high due to the electrical power discharged from the electrical power storage device 7 by way of the DC/DC power converter 6. However, when the discharge starting voltage Vdisc is too low, there is little opportunity for discharge from the electrical power storage device 7 to the feeder line so the voltage Vdisc is preferably set to a voltage near the voltage output from the diode rectifier 3 during no-load condition.

The operation of the Voltage control system 24 during charging is described next. A subtractor 241 subtracts the feeder line voltage V 1 from the power absorption starting voltage Vabs, and an automatic voltage regulator (AVR) 242 is installed to lower the excessive voltage comprised of the negative differential. A limiter 243 is installed to prohibit voltage control operation from discharging into the feeder line from the power storage device 7, when the feeder line voltage V1 is between Vabs and Vdisc (Vabs > V1 > Vdisc). The Voltage control system 24 in this way functions during charging, to lower an excessively high feeder line voltage V1 down to the power absorption starting voltage Vabs.

When this reference voltage Vabs is lower than the output voltage from the diode rectifier 3 during no-load, then in spite of the fact that the feeder line voltage V1 is not too high, the power from the alternating current system 1 is absorbed by way of the diode rectifier circuit 3 into the power storage device 7, and the power absorbed from the regenerative railcar might possibly decrease. The reference voltage Vabs should therefore be set to a value higher than the maximum output voltage value during no-load on diode rectifier 3 while there is no regenerative railcar. Conversely, when this reference voltage Vabs is too high, the absorption of regenerated (recovered) power is delayed so the reference voltage Vabs is preferably to a value several dozen volts higher than the maximum output voltage with no-load on the diode rectifier 3 and no regenerative railcar connected.

The power control system 25 during discharging, an essential section of the present invention is described next. First of all, the charging rate calculator 251 inputs the voltage V2 of the power storage device 7 (actually of the filter capacitor 18) detected by the voltage detector 28 and the battery current I detected by the current detector 29, and calculates the charging rate SOC. This charging rate SOC is input to the stored power calculator section 252, where the current store power J is calculated, and is output to the discharge power command section 253. This discharge power command section 253 loads the predicted surplus power occurrence time Tabs and the command value Jabs for the preabsorption storage power command 255 from the database 254, and calculates the discharge power command value for average discharge up to the time Tabs. In other words, the discharge power command section 253 subtracts the (power) preabsorption storage power command value Jabs from the current stored power J, and by dividing by the time up until the predicted surplus power occurrence time Tabs, finds the average power that must be discharged up to the predicted time.

This discharge power command value is input to the subtractor 256 and is output the limiter 257 after subtracting the output from the consumed power detector 30 of the station load device 19. The subtractor 256 is of course unnecessary if the there is not station load device 19.

The limiter 257 is set to a limit of zero when the load from the subtractor 256 is negative. In all other cases, the output of the subtractor 256 is output unchanged to the selector switch 23.
Therefore, when the feeder line voltage V1 falls below the discharge starting voltage Vdisc, the selector switch 23 switches to the upper side (contact) if the discharge permission signal 208 is present, allowing discharge to the feeder line. This discharge power command forms the power command W* to the current control system 26 described next.

The final section of the control system is the current control system 26. The current command section 261 divides the power command W* from the selector switch 23 by the voltage V2 of capacitor 18, calculates the current command value I*, and outputs it to the subtractor 262. This subtractor 262 outputs the difference between this current command value I* and current detector value I to the automatic current regulator (ACR) 263. The automatic current regulator 263 performs PWM control of the IGBT11, 12 within the switching section 8 of the power converter 6 in order to reduce this difference.

The operation of the first embodiment configured as above, is described next.

The discharge power command section 253 calculates the average discharge power command value needed for lowering the current stored power J to a value lower than the preabsorption storage power command value Jabs up to the predicted surplus power occurrence time Tabs. Based on this, the power is steadily discharged from the power storage device 7 to the feeder lines 4, 5, and set to a state capable of definitely absorbing the surplus power from the regenerative railcar. The predicted surplus power occurrence time Tabs is therefore the time predicted for the feeder line voltage V1 to reach a value higher than the power absorption starting voltage Vabs by regenerative (recovery) operation of the electric rolling stock.

The method for setting the predicted surplus power occurrence time Tabs is described next.

The time required for an electric railway train (or electric rolling stock) stopped at a station to reach a location 500 meters from the station can be predicted from the train timetable. When the power converter 6 is installed in the vicinity of station, this time can be set as the predicted surplus power occurrence time Tabs. Also, using an operation simulator allows predicting the power consumed or discharged by the electric railway train that changes over time, under the condition that the power converter 6 is off, so that changes in the feeder line voltage V1 can also be predicted. Therefore the time for the voltage V1 of the feeder line connected to the power converter 6 to reach a value larger than the power absorption starting voltage Vabs can also be predicted and therefore this value may be set as the predicted surplus power occurrence time Tabs. Further, when replacing the regenerative power absorption device, the history (log) of the power absorption starting times of the previous regenerative power absorption device can be set as the predicted surplus power occurrence time Tabs.

Besides the method for setting the time related in the embodiment, there are also many other methods. By compiling actual data, one can learn from latter circumstance. If an accident, for example has destroyed data in the train timetable, then preferably operating information, car passenger counts or information such as changes in the energy balance due to increases or decreases in the number of passenger can be used to find the predicted surplus power occurrence time Tabs. Any of the above methods can be used to set the predicted surplus power occurrence time Tabs into the database 254.

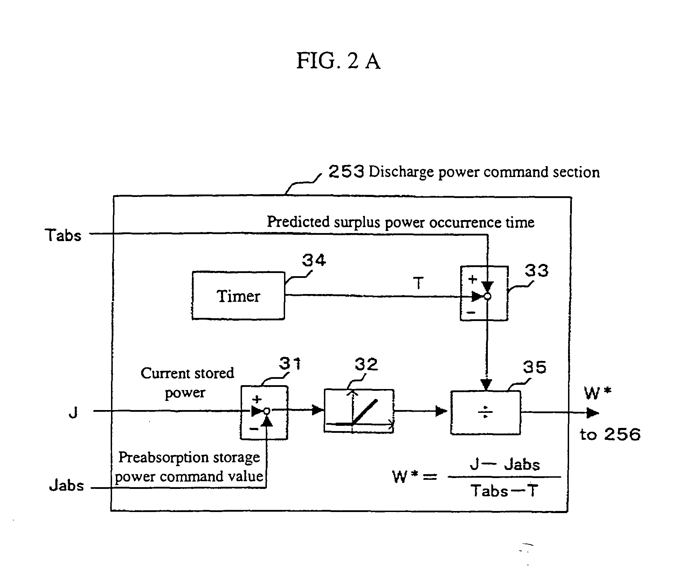

FIG. 2A is a block diagram showing in detail the discharge power command section 253. The subtractor 31 calculates the difference between the stored power J of power storage device 6 input from the stored power calculator section 252, and the command value Jabs from the (power) preabsorption storage power command 255, and calculates the electrical power (J-Jabs) that should be discharged prior to power absorption operation. During the discharge adjustment, only an output of zero or more is extracted with the limiter 32, so that the discharge of this stored (electrical) power is performed only when the current stored electrical power J is larger than the (power) preabsorption storage power command value Jabs representing the target goal value.

Among the predicted surplus power occurrence times stored in the database 254, the subtractor 33 loads the nearest predicted surplus power occurrence time Tabs to the rear of the current time T. The subtractor 33 then calculates the difference versus the output T of the timer 34 that outputs the current time T, and then outputs the time (Tabs - T) up to the next predicted surplus power occurrence time Tabs, to the divider 35.

The divider 35 calculates the discharge power command value W* for adjusting the amount of remaining electrical power in the power storage device 7 up until the predicted surplus power occurrence time Tabs. More specifically, the divider 35 divides the output of the subtractor 31 (J-Jabs) by the subtractor 33 (Tabs-T), sets the resulting quotient as the discharge power command value W*. This discharge power command value W* is set as zero for a T greater than Tabs.

The discharge power command section 253 in this way calculates the discharge power command value W* for performing a uniform discharge of power stored in the power storage device 7 by way of the power converter 6 to reach the goal of a (power) preabsorption storage power command value Jabs by discharging power up to the predicted surplus power occurrence time Tabs.

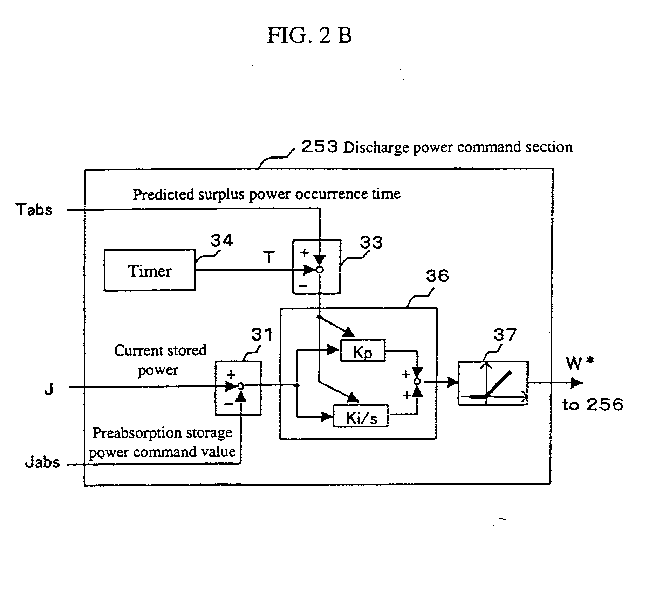

FIG. 2B is a detailed block diagram of the discharge power command section of the embodiment of the present invention. Sections identical to those in FIG. 2A are assigned the same reference numerals and their description is omitted. The differential between the preabsorption storage power command value Jabs and the current stored power J are input to the PI control 36, and the proportional gain Kp and integrated gain Ki of the proportional integrator (PI) control 36 are changed according to the time predicted for the feeder line voltage V1 to reach the power absorption starting voltage Vabs. The limiter 37 extracts only outputs from the PI control 36 that are zero or higher, so that adjustment by discharge from the stored electrical power is performed only when the current stored electrical power J is larger than the preabsorption storage power command value Jabs which is the target value.

In this embodiment also, the discharge power command section 253 calculates the discharge power command value W* that should be discharged in order for the stored electrical power J at that point, to reach a value lower than the preabsorption storage power command value Jabs up to the time Tabs.

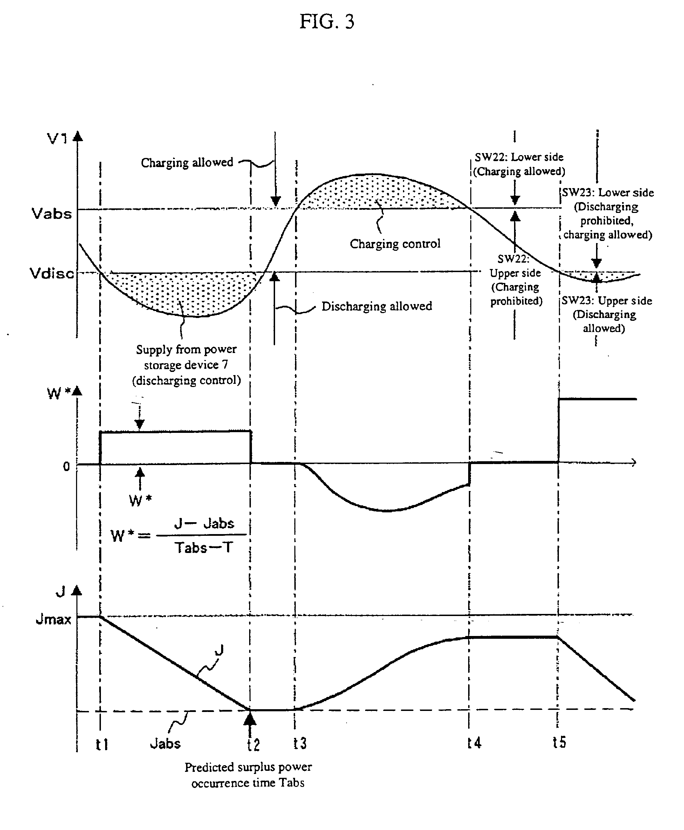

FIG. 3 is an operation waveform chart of the storage type regenerative power absorption device of the embodiment of the present invention. Waveform variations in the feeder line voltage V1, power command W*, and the stored power J of the power storage device 7 are shown along the horizontal axis as the time axis.

The interrelation of the selector switches 22, 23 and the feeder line voltage V1 is described first. As shown at the right edge of FIG. 3, the switches 22, 23 are switched to the top or bottom side according to the size of the feeder line voltage V1. Consequently, as shown in the approximate center and left in the figure, on one side, the feeder line voltage V1 is capable of charging up to a value of power absorption starting voltage Vabs or higher. On the other (switch) side the feeder line voltage V1 is capable of discharging within a value of discharge starting voltage Vdisc. As long as the feeder line voltage V 1 is between the power absorption starting voltage Vabs and the discharge starting voltage Vdisc (Vdisc < V1 < Vabs), the feeder line voltage is judged as within a normal range, and the regenerative power absorption device of the present embodiment does not operate.

Since the feeder line voltage V1 is within the range of Vdisc < V1 < Vabs up until time t1, the selector switch 22 switches to the top side, and the power command value W* to the power converter 6 is zero.

Next, the feeder line voltage V1 drops to a value lower than Vdisc (V1 < Vdisc) in the period from time t1 to t2. The comparator 206 therefore issues a discharge permission signal 208 to allow discharging from the power storage device 7. The selector switch 23 then switches to the upper side, the power control system 25 is enabled for discharging, and the discharge rate is adjusted by discharge control. As previously described, the power control system 25 outputs a power command value W* in order to perform uniform power discharge from that point in time, of the stored power J in power storage device 7 up until the time Tabs (t2 in FIG. 3) so that a value within the preabsorption storage power command value Jabs is reached. Since the power converter 6 discharges the power stored in power storage device 7, to the feeder line in compliance with the discharge power command value W*, the stored power J in the power storage device 7 then matches the preabsorption storage power command value Jabs up to time t2. As shown in FIG. 3, the feeder line voltage V1 exceeds the discharge starting voltage Vdisc for a period of time after the time t2, the selector switch 23 again returns to the state shown in the figure and discharge control then stops.

Afterwards, the feeder line voltage V1 is between the power absorption starting voltage Vabs and the discharge starting voltage Vdisc (Vdisc< V1 < Vabs) up until time t3, so the feeder line voltage V1 is judged as within a normal range. The regenerative power absorption device of the present embodiment therefore does not operate and no charging is performed.

Next, the feeder line voltage V1 exceeds the power absorption starting voltage Vabs when the time t3 is reached. The charge prohibition signal 205 from the comparator 204 of charge/discharge OK/NG decision section 20 is then canceled, the selector switch 22 returns to the state shown in the figure, the voltage control system (AVR) for charging is enabled and charging performed. Voltage control is in this way performed during charging from the time t3 up to time t4 by the voltage control system 24 operating to charge the power storage device 7, to make the feeder line voltage V1 match the power absorption starting voltage Vabs.

Since the feeder line voltage V1 again reaches the range of Vdisc < V1 < Vabs at time t4, the selector switch 22 switches to the upper side and the power command value W* reaches zero. The regenerative power absorption device does not operate and no charging/discharging is performed.

Then, since the feeder line voltage V 1 again drops to V < Vdisc at time t5, a discharge permission signal 208 allowing the supply of power from the power storage device 7 by discharging is issued. So the selector switch 23 switches to the upper side, and the discharge control then adjusts the charging rate. In this case also, the power command value W* for discharging is calculated from the next predicted surplus power occurrence time Tabs, and from the stored electrical power J in the power storage device 7 at the time t5, and the power command value W* for discharging is output.

The structure of the present embodiment may be summarized as follows. The main circuit comprises one to three direct current power supplies, a power storage device 7 connected to the feeder lines 4, 5, and a power converter device 6 for exchanging power between the feeder line and the power storage device 7. When the voltage on the feeder lines 4, 5 is high, the control system uses the power converter 6 to control charging of the power storage device 7 from the feeder lines 4, 5. When the voltage on the feeder lines is low, the control system uses the power converter 6 to control discharging from the storage device 7 to the feeder lines. Here, the control system comprises a means (stores those data results in the database 254) to predict a rise in feeder line voltage and, a means (charging rate calculator 251) to detect the power stored in the power storage device 7. When the feeder line voltage then rises, the control system further contains a means 25 for calculating the discharge power command value W* to lower the detected power stored in the power storage device 7 down to a predetermined value Jabs up until the predicted time Tabs.

The present embodiment is therefore capable of adjusting the power stored in the power storage device 7 before power absorption operation when the feeder line voltage is predicted to rise due to the regenerative railcar, and capable of reliably absorbing that power regenerated afterwards. Therefore the embodiment is capable of boosting the energy efficiency and lower the equipment cost of at least the power storage device 7, even when the power storage device 7 has comparatively low capacity.

### Second Embodiment

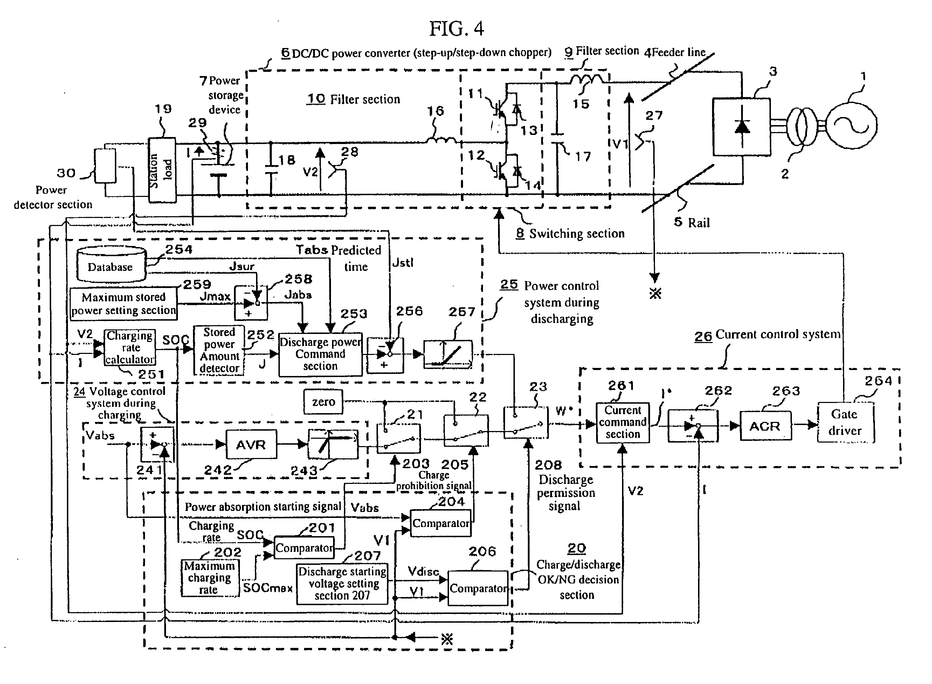

FIG. 4 is an overall block diagram of the storage type regenerative power absorption device of another embodiment of the present invention. In FIG. 4, sections identical to FIG. 1 are assigned the same reference numbers and the description for those identical sections is omitted. The present embodiment differs from the first embodiment only in that the power control system 25 (during discharging) is internally different. First of all, in addition to the predicted surplus power occurrence time Tabs, the database 254 stores the predicted surplus electrical power J comprising the electrical power that must be absorbed, and for which the feeder line voltage V1 at the point connected to the power converter 6 is set as the power absorption starting voltage Vabs. Next, the calculator 258 subtracts this surplus electrical power Jsur from the maximum allowable stored electrical power Jmax set in the maximum stored power setting section 259, and calculates the preabsorption stored power command value Jabs.

The power converter 6 in this way adjusts only the required amount of stored power prior to the power absorption operation so that excess discharging from the power storage device 7 is suppressed, and losses occurring from the power converter 6 are reduced.

Only the points different from the previous embodiment are described from hereon. The power preabsorption stored power command value Jabs output from the subtractor 258 is a variable amount dependent on the surplus electrical power Jsur. Therefore, when the surplus electrical power Jsur is small, the power preabsorption stored power command value Jabs is set to a value close to the maximum allowable stored electrical power Jmax, and the power discharged from the power storage device 7 can be kept small. Losses within the internal resistor of the power storage device 7 constituting for example a secondary battery, or for example a step-up/step-down chopper constituting the power converter 6 can in this way be suppressed.

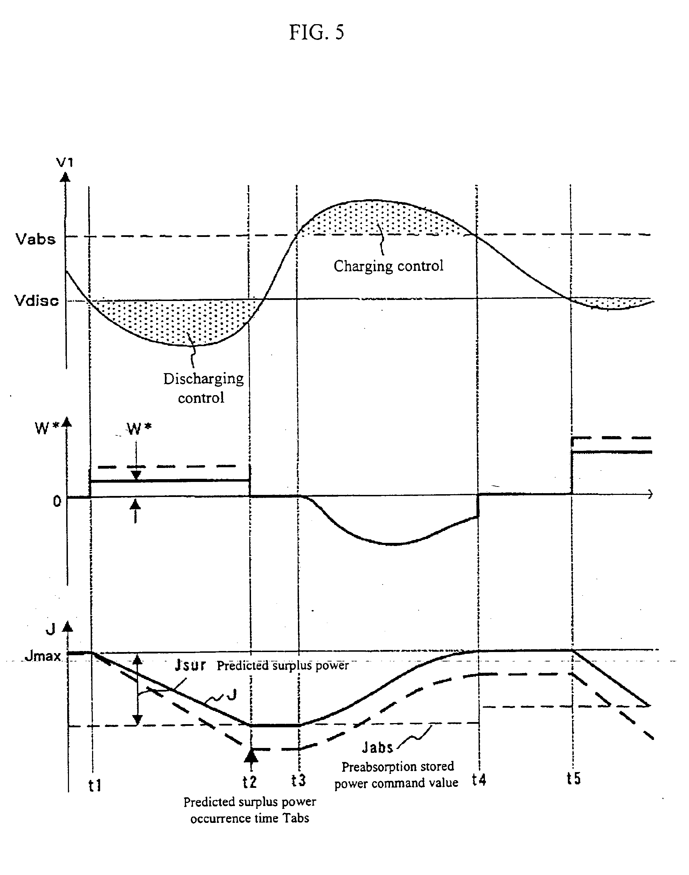

FIG. 5 is an operation waveform chart of the storage type regenerative power absorption device of the embodiment in FIG. 4. This figure reflects the chart in FIG. 3. In order to compare the discharge power command value W* and the stored power J of the storage power device 7 in the graph, the stored power J of the storage power device 7 and discharge power command value W* of the previous embodiment are respectively shown with dashed lines. In the present embodiment, the Jabs changes according to the circumstances in order to calculate the power preabsorption stored power command value Jabs from the surplus electrical power Jsur. In this example, the surplus electrical power Jsur is comparatively small so that the power preabsorption stored power command value Jabs is larger than in the previous embodiment. The power command value W* for discharging power up to the predicted surplus power occurrence time t2 therefore becomes small as shown in the figure, and the change in the stored power J of power storage device 7 is also therefore kept small.

At time t4, the power preabsorption stored power command value Jabs is once again calculated based on the predicted surplus power occurrence time Tabs and the surplus electrical power Jsur. Based on this, the power command value W* is calculated to be lower than the newly calculated power preabsorption stored power command value Jabs from the time t5 up to the newly predicted time Tabs of stored power J in power storage device 7.

The present embodiment can therefore prevent excessive discharging from the power storage device 7 by predicting the surplus electrical power Jsur. Therefore, in addition to the effects of the previous embodiment, the power losses occurring in secondary battery cells (power storage devices) 7 and two-way choppers (power converters) 6 can be suppressed.

The present invention improves the utilization rate of power storage devices of regenerative power absorption devices for railways. The present invention among other items can also be applied to hybrid automobiles and hybrid energy electric rolling stock. In other words, instead of the alternating current system 1, a system can comprise an engine generator, and a motive-energy regenerating motor can be used instead of the electric rolling stock constituting the load; and the time the brake starts to be applied can be predicted and stored in the database 254 as the means to predict the rise in the direct current power supply voltage. The invention can in this way be utilized as a regenerative power absorption device for power storage devices in hybrid automobiles and hybrid energy electric rolling stock.

## Claims

1. A regenerative power absorption control method for electric railways, with a power storage device connected to a direct current feeder line, and a power converter device for controlling the exchange of power between said direct current feeder line and said power storage device, said method comprising the steps of:
predicting a rise in the voltage in said feeder line; and
discharging the power stored in said power storage device according to said predicted voltage rise, into said feeder line, so that the stored power in said power storage device falls within said predetermined value.

2. A regenerative power absorption control method for electric railways, according to claim 1, wherein the step for predicting a rise in the voltage in said feeder line includes a step for predicting the time to raise said feeder line voltage to predetermined value; and the step for discharging the power stored in said power storage device into said feeder line comprises a step for calculating the average discharge of power discharge to lower the power stored in said power storage device to within a predetermined value within a time period, and a step for controlling said power converter device based on said average discharged power.

3. A regenerative power absorption control method for electric railways, according to claim 1, comprising a step for prohibiting the discharge from said power storage device to said feeder line when said feeder line voltage is higher than a predetermined value.

4. A regenerative power absorption control method for electric railways, according to claim 1, comprising a step for prohibiting the charging from said feeder line to said power storage device when said feeder line voltage is below a predetermined voltage.

5. A regenerative power absorption control method for electric railways, according to claim 1, comprising the steps of:
prohibiting the charging from a feeder line to said power storage device when said feeder line voltage is below a predetermined voltage;
prohibiting the discharge from said power storage device to said feeder line when said feeder line voltage is higher than a second predetermined voltage that is lower than said predetermined voltage.

6. A regenerative power absorption control method for electric railways, according to claim 1, wherein the step for predicting a rise in said feeder line voltage, comprises a step for calculating the time of the rise of said feeder line voltage based on the train timetable.

7. A regenerative power absorption control method for electric railways, according to claim 1, wherein the step for predicting a rise in said feeder line voltage, comprises a step for calculating the time of the rise of said feeder line voltage based on an operating simulation of the electric rolling stock.

8. A regenerative power absorption control method for electric railways, according to claim 1, wherein the step for predicting a rise in said feeder line voltage, comprises a step for calculating the time of the rise of said feeder line voltage based on the past operating history of said regenerative power absorption device.

9. A regenerative power absorption control method for electric railways, according to claim 1, comprising the steps of:
predicting the surplus electrical power of said feeder line;
subtracting the surplus electrical power from the maximum stored electrical power of said power storage device and calculating a predetermined value for the stored electrical power.

10. A regenerative power absorption control device for electric railways, comprising a direct current power supply (4,5), a power storage device 7 connected to said feeder line, and a power converter 6,8 device for exchanging power between said feeder line and said power storage device, and a control device 20-26 for controlling the charging of said power storage device from said feeder line by utilizing said power converter device when said feeder line voltage is high, and also controlling the discharge to said feeder line from said power storage device using said power converter device when said feeder line voltage is low, said device further comprising:
means for predicting a voltage rise on said feeder line;
means for detecting the power stored in said power storage device; and
means for calculating the discharge power command to lower the stored power in said power storage device to a predetermined value, up until the time predicted for said feeder voltage to rise.

11. A regenerative power absorption control device for electric railways, according to claim 10, comprising a voltage control device for controlling the charging so that said feeder line voltage approaches the target value when there is a rise in said feeder line voltage.

12. A regenerative power absorption control device for electric railways, according to claim 10, comprising switching means for switching to discharge control, charge control and/or no control utilizing said power converter device based on said feeder line voltage.

13. A regenerative power absorption control device for electric railways, according to claim 10, wherein said means for predicting the rise in said feeder line voltage comprises means for predicting the time for said feeder line voltage to rise based on the operating time table of the electric railway or electric rolling stock.

14. A regenerative power absorption control device for electric railways, according to claim 10, wherein said means for predicting the rise in said feeder line voltage comprises an operation simulator for calculating the time of the rise in said feeder line voltage.

15. A regenerative power absorption control device for electric railways, according to claim 10, wherein said means for predicting the rise in said feeder line voltage comprises means for calculating the time for said feeder line voltage to rise, based on the past operating history of said regenerative power absorption device.

16. A regenerative power absorption control device for electric railways, according to claim 10, wherein said means for predicting the amount of surplus electrical power in said feeder line comprises means for subtracting the amount of surplus electrical power from the amount of maximum stored electrical power in said power storage device and calculating a predetermined value for said stored electrical power.

17. A regenerative power absorption control device for electric railways, according to claim 10, wherein said power storage device comprises a secondary battery.

18. A regenerative power absorption control device for electric railways, according to claim 10, wherein said power storage device comprises an electrical dual-layer capacitor.

19. A regenerative power absorption control device for electric railways, according to claim 10, wherein said power storage device comprises a flywheel generator.

20. A control device for a power converter comprising a power storage device connected to a direct current power supply, and a power converter device for exchanging electrical power between said direct current power supply and said power storage device; and said power converter device of this control device containing a control device for controlling the charging to said power storage device from the direct current power supply using said power converter device when the direct current power supply voltage is high, and controlling the discharging to the direct current power supply from said power storage device using said power converter device when the direct current power supply voltage is low, said control device further comprising:
means for predicting a voltage rise in the direct current power supply;
means for detecting the power stored in said power storage device; and
means for calculating the discharge power command to lower the stored power in said power storage device to a predetermined value, up until the time predicted for the rise in the direct current power supply voltage.
